# EUROPÄISCHE PATENTANMELDUNG

(11) **EP 0 844 712 A2**
(43) Veröffentlichungstag der Anmeldung: **27.05.1998**
(21) Anmeldenummer: 97120627.1
(22) Anmeldetag: 25.11.1997
(51) Int. Cl.: H02B 7/06

(54) **Transportable Raumzelle als Umspannstation sowie Vorrichtung zu deren Herstellung**

(30) Priorität: 25.11.1996 DE 19648669
(71) Anmelder: Betonbau GmbH, D-68753 Waghäusel (DE)
(72) Erfinder: Primus, Illo-Frank Dr.-Ing.,, 76327 Pfinztal 1 (DE); Stegemann, Harry Dipl.-Arch.,, 31167 Bockenem (DE)
(74) Vertreter: Hiebsch, Gerhard F., Dipl.-Ing.

(57) **Zusammenfassung**

Eine transportable Raumzelle in Form einer mit einem Sockelabschnitt teilweise in Erdreich abgesenkten, einen Umformraum für einen Transformator od.dgl. enthaltenden Umspannstation weist an eine Bodenplatte angefügte Seitenwände und eine diese überspannende Dachplatte auf; die Seitenwände sind durch wenigstens eine den Umformraum zu einem Spannungsraum hin begrenzende Zwischenwand sowie durch zumindest eine Stirnwand verbunden, wobei die Zwischenwand einen Durchbruch enthält, den bodenwärts eine Sohlbank begrenzt, die zu dem zu belüftenden Raum der Raumzelle -- insbesondere zum Umformraum -- hin abwärts geneigt ist. Die Raumzelle ist mit einem etwa in Richtung der Sohlbank geneigten Sturz des Durchbruches versehen. Dessen von beiden Flächen begrenzter vertikaler Querschnitt verjüngt sich zum Umformraum hin, wobei der Neigungswinkel der Sohlbank kleiner ist als der Neigungswinkel des Sturzes.

## Beschreibung

Die Erfindung betrifft eine transportable Raumzelle in Form einer -- mit einem Sockelabschnitt -- teilweise in Erdreich abgesenkten, einen Umformraum für einen Transformator od.dgl. enthaltenden Umspannstation mit an eine Bodenplatte angefügten Seitenwänden und diese überspannender Dachplatte, bei der die Seitenwände durch wenigstens eine den Umformraum zu einem Spannungsraum hin begrenzende Zwischenwand sowie durch zumindest eine Stirnwand verbunden sind, wobei bevorzugt die Zwischenwand einen Durchbruch aufweist. Zudem erfaßt die Erfindung eine Vorrichtung zum Herstellen einer Raumzelle aus Beton mittels eines Schalungskerns sowie mindestens einer relativ dazu verstellbaren Außenschaltafel zur Bildung eines Gießraumes für eine Seiten- oder Stirnwand.

Die DE-A- 43 10 290 der Anmelderin offenbart beispielhaft eine derartige Raumzelle mit an eine Bodenplatte angefügten Seitenwänden und einer auf diese aufgesetzten Dachplatte, bei der die Seitenwände durch -- den Umformraum beidends abschließende -- Zwischenwände und durch Stirnwände verbunden sind; letztere begrenzen beidseits den Zwischenwänden vorgesetzte Spannungsräume nach außen hin, wobei eine dieser Zwischenwände einen Durchbruch aufweist. In zumindest einer der Seitenwände ist eine Ausnehmung für ein türartiges Verschließelement des Umformraumes vorgesehen. Zudem sind etwa rechtwinkelig zu den Seitenwänden an die Bodenplatte in den Zelleninnenraum ragende, sich querschnittlich von der Bodenplatte weg verjüngende Betonrippen monolithisch angeformt. Die Bodenrippen bilden mit Bodenplatte und Seitenwänden eine einstückige Bodenwanne für den Umformraum sowie jeweils einen Sockel für eine auf sie aufsetzbare den Umformraum begrenzende Wandplatte. Die Stirnwand ist mit einer Verschlußtüre für einen Mittelspannungsraum bzw. einen Niederspannungsraum ausgestattet.

Innerhalb der einen Wandplatte ist oberhalb der Bodenrippe ein Durchbruch vorgesehen, der als Strömungsspalt für Luft Mittelspannungsraum und Umformraum miteinander verbindet. Der Mittelspannungsraum ist durch die ihn untergreifende Bodenplatte geschlossen; in ihr sind abdichtbare Durchführungen für Stromkabel vorgesehen. Der Niederspannungsraum ist bodenwärts offen; dessen Stirnwand und die Bodenplatte begrenzen einen Bodenspalt.

Der Zelleninnenraum einer beispielsweise aus der Schrift zum DE-U-83 34 221 bekannten Umspannstation ist in einen Umformraum zur Aufnahme des Transformators mit darunterliegender Ölwanne sowie einen Schaltraum zur Aufnahme der Hoch-, Mittel- oder Niederspannungsschaltgeräte aufgeteilt. Solche Stationen werden als sog. Fertigstationen werkseitig mit den notwendigen Schaltgeräten -- mit Ausnahme des Transformators --, Befestigungsschienen und der kompletten elektrischen Installation samt Erdung ausgerüstet, so daß an der Baustelle nur noch der üblicherweise auf Rädern montierte Transformator auf in der Station vorhandenen Schienen in den Zelleninnenraum eingeschoben werden muß. Letzterer ist dank zweier horizontal schwenkbarer Türen zugänglich, die Teil einer aus Profilen und Platten bestehenden Seitenwand sind.

Mit jener Schrift zu DE-U-83 34 221 wurde zur Vereinfachung vorgeschlagen, ein Paar von Betonrippen als Schienen für den Transformator der Umspannstation auszugestalten sowie eine dritte -- ebenfalls an die Bodenplatte angeformte und gegenüber den beiden anderen höher aufragende -- Betonrippe als Teil der Ölwanne vorzusehen. Eine vierte angeformte Rippe dient hier als Auflager für Fußbodenplatten, insbesondere in dem die Schaltschränke aufweisenden Teil der Umspannstation, und kann in Anpassung an die unterschiedlichen Fußbodenhöhen selbst verschiedene Höhen aufweisen.

Bei einem Verfahren zum Herstellen einer monolithischen Betonraumzelle mit einer Bodenplatte und vier Umfassungswänden mittels eines faltbaren Schalungskerns mit festem Deckenspiegel, vier Eckstielen od.dgl. Eckelementen, mindestens vier Wandschaltafeln sowie verfahrbaren Außenschalwänden, werden nach der DE-A-42 07 499 der Anmelderin an die Umfassungswände der Raumzelle auf die den Wandschaltafeln gegenüberstehenden Bereiche nach innen ragende Konsolenleisten monolithisch anbetoniert und beim Falten des Schalungskernes zuerst die Wandschaltafeln um eine Strecke sowie anschließend die Eckstiele um ein bestimmtes Maß eingezogen.

In Kenntnis dieses Standes der Technik hat sich der Erfinder das Ziel gesetzt, bei einer Umschalt- oder Kleinstation sowohl die Belüftung des Umformraumes zu verbessern als auch die Kabelzuführung zu den Räumen. Darüber hinaus soll sie in einfacher und kostengünstiger Weise herzustellen und auszurüsten sowie an die Aufstellumgebung anzupassen sein.

Zur Lösung dieser Aufgabe führen die Lehren der unabhängigen Patentansprüche; die Unteransprüche geben vorteilhafte Weiterbildungen an.

Erfindungsgemäß ist zur Verbesserung der Luftströmung eine den Durchbruch bodenwärts begrenzende Sohlbank zu dem zu belüftenden Raum der Raumzelle, insbesondere zum Umformraum, hin abwärts geneigt, und ein seinerseits in Richtung der Sohlbank geneigter Sturz begrenzt den Durchbruch nach oben hin; sein Neigungswinkel ist größer als jener der Sohlbank, so daß sich der vertikale Durchbruchsquerschnitt zum Umformraum hin -- insgesamt abwärts geneigt -- verjüngt. Nach einem weiteren Merkmal der Erfindung kann sich auch der horizontale Durchbruchsquerschnitt gleichermaßen zum Umformraum hin verjüngen. Es entsteht also eine Querschnittsverengung des Durchbruches zum Umformraum hin.

Dank der vorstehenden Maßgaben wird die vom Erfinder gewünschte Verbesserung der Strömungsverhältnisse in bestechender Weise für Raumzellen bzw. Umspannstationen unterschiedlicher Ausgestaltung erreicht.

Verläuft der Durchbruch der Zwischenwand im Bereich des -- durch die Einsatztiefe bestimmten und im Boden liegenden -- Sockelabschnitts, ist zudem der an die Zwischenwand anschließende Spannungsraum bodenwärts offen, so soll in diesem dem als Lüftungsschlitz dienenden Durchbruch in Abstand eine Wandung als sog. Wehrwand vorgeordnet sein, deren Oberkante etwa von jener Einsatztiefe der Raumzelle bestimmt wird und die Teil einer vor dem Durchbruch vorgesehenen -- bevorzugt trogartigen -- Wasserschutzeinrichtung ist. Die offene Bodenplatte des Spannungsraumes dient der bequemen Durchführung von Stromkabeln, läßt aber unerwünschterweise Grundwasser in den Spannungsraum eintreten, das jedoch durch die Wasserschutzeinrichtung daran gehindert wird, den Lüftungsdurchbruch in der Zwischenwand zu erreichen. Der Lüftungsdurchbruch wiederum wird im Sockelabschnitt vorgesehen, da diese Lage zu einer besseren Durchlüftung des Umformraumes führt.

Vorteilhafterweise wird die Wandung oder Wehrwand sowohl an die Bodenplatte außerhalb des Umformraums in Abstand zur Zwischenwand als auch an die Seitenwände angefügt, wobei die Höhe der Wehrwand der Einsatztiefe der Raumzelle etwa entspricht. Die Wehrwand ist nach einem anderen Merkmal der Erfindung an eine Kante der Bodenplatte angeformt und begrenzt mit einer benachbarten Stirnwand zwischen den Seitenwänden einen Bodenspalt.

Als günstig hat sich auch erwiesen, die Wehrwand an einen von der Zwischenwand abkragenden Verlängerungsabschnitt der Bodenplatte so anzuformen, daß sie innerhalb des Spannungsraumes von der Bodenplatte aufragt. Dieses Merkmal erlaubt eine von Guß zu Guß veränderbare Weite jenes Bodenspaltes; das Verhältnis des Abstandes der Wehrwand von der zugeordneten Zwischenwand zu deren Abstand von der Stirnwand soll bevorzugt etwa 1 : 2 bis 1 : 3 betragen.

Im Rahmen der Erfindung liegt es, die Wehrwand sowie die ihr fernliegende Zwischenwand an quer zu den Seitenwänden verlaufenden Kanten der Bodenplatte anzuformen. Deren Plattenkanten sind Endwulste, die vor den anschließenden Wänden eine abwärts geneigte Pultfläche bilden.

Nach einem anderen Merkmal der Erfindung ist in einer Ausnehmung einer der Seitenwände ein türartiges Verschlußelement in der Art eines formschlüssig in der Schwellenkante der Ausnehmung festlegbaren Lüftungseinsatzes ausgebildet. Vom unteren Ende des Lüftungseinsatzes ragen Steckzapfen ab, die in Gegenglieder einer Halfenschiene od. dgl. Schienenelement der Schwellenkante eingesetzt werden können. In vertikaler Lage des Lüftungseinsatzes kann dieser durch ein an ihm dachnah angebrachtes Dirakschloß festgelegt werden.

Der erfindungsgemäße Lüftereinsatz weist -- Strömungswege für Luft begrenzende -- Querprofile auf, die in einem Einsatzrahmen horizontal festliegen und jeweils durch einen flächigen Frontsteg, einen dazu geneigten Mittelstreifen und einen zum Frontsteg parallelen Rückensteg die Tiefe des Lüftereinsatzes bestimmen; dem Frontsteg des einen Querprofils liegt der Rückensteg des darunter verlaufenden Querprofils gegenüber, und beide sind durch ein in ihnen lösbar festgelegtes Gitterelement etwa horizontal verbunden.

Um die Raumzelle -- besonders ihre Frontseite -- den jeweiligen örtlichen Gegebenheiten besser anpassen zu können, hat es sich als günstig erwiesen, in zumindest eine Seitenwand und/oder Stirnwand eine Rücksprungfläche einzuformen, die an wenigstens drei Seiten -- bodenwärts sowie seitlich -- durch erhöhte Rahmenteile begrenzt wird. An dieser Rücksprungfläche wird eine Oberflächenschicht -- insgesamt oder in Teilen -- eingesetzt, welche die Oberfläche der entsprechenden Wand wunschgemäß verändert, und die gegebenenfalls auswechselbar ist.

Im Rahmen der Erfindung liegt auch eine Vorrichtung zum Herstellen der der beschriebenen Raumzelle aus Beton mittels eines Schalungskerns -- wie er beispielsweise der US-A 3 894 711 zu entnehmen ist -- und mindestens einer verfahrbaren Außenschaltafel zur Bildung eines Gießraumes für eine Seiten- bzw. Stirnwand, bei der die Außenschaltafel zumindest eine auf ihre -- deren Schalungskern zugekehrte -- Schalfläche aufgesetzte Ansatzplatten aufweist; deren Dicke entspricht der Tiefe jener oben erwähnten, in die Außenfläche der Seiten- bzw. Stirnwand eingeformten Rücksprungfläche.

Außerdem kann diese Außenschaltafel an ihrer der Wandoberkante zugeordneten Längskante mit einer diese begleitenden Fußleiste ausgerüstet sein; diese erzeugt dann an jener Oberkante einen schulterartigen Absatz als Teil einer umlaufenden Schattenfuge, die später an einer ihrer Nutseiten von der aufgesetzten Dachplatte begrenzt wird.

Nach weiteren Merkmalen der Erfindung ist die Dicke der Ansatzplatte (106) geringer als die Kragweite der Fußleiste, und wenigstens eine Vertikalkante der Außenschaltafeln ist ein Winkelstück und weist eine querschnittlich gekrümmte Innenfläche auf, um die Gebäudekanten auf einfache Weise auszubilden. Dazu sind vorteilhafterweise zwei einander gegenüberliegende Außenschaltafeln beidends mit vertikalen Winkelschenkeln versehen, die gegebenenfalls jene querschnittlich gekrümmten Innenflächen anbieten.

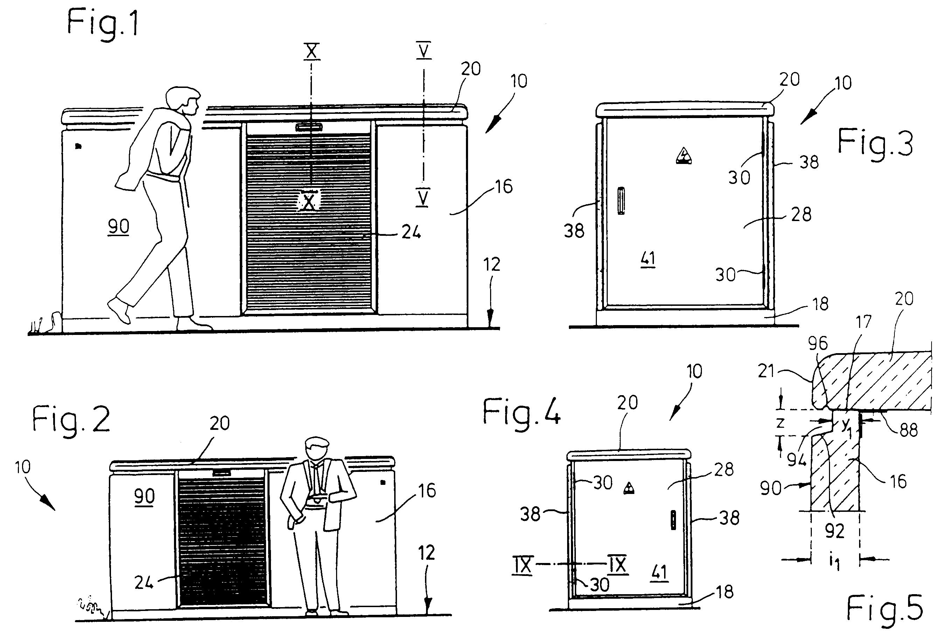

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1, 2:: Seitenansichten einer Umschaltstation in zwei unterschiedlich großen Wiedergaben;
- Fig. 3, 4:: die beiden Stirnansichten der Umschaltstation;
- Fig. 5:: einen vergrößerten Längsschnitt gemäß Linie V-V der Fig. 1 durch einen Dacheckbereich der Umschaltstation;
- Fig. 6:: den vertikalen Längsschnitt durch die Umschaltstation;
- Fig. 7:: einen horizontalen Schnitt durch die Umschaltstation;
- Fig. 8:: einen vertikalen Querschnitt durch die Umschaltstation nach Linie VIII-VIII in Fig. 7;
- Fig. 9:: einen vergrößerten Horizontalteilschnitt gemäß Linie IX-IX der Fig. 4;
- Fig. 10, 11:: zwei vergrößerte Abschnitte eines vertikalen Schnittes nach Linie X-X der Fig. 1;
- Fig. 12, 13, 14:: den Fig. 6, 7, 8 entsprechende Darstellungen einer weiteren Ausführung der Umschaltstation, wobei die Schnittlinie XIV-XIV zum Vertikalschnitt der Fig. 14 in Fig. 13 zu erkennen ist, deren Schnittebene ist mit H bezeichnet (Fig. 14);
- Fig. 15:: einen vergrößerten Ausschnitt aus Fig. 12 mit einem Lüftungsschlitz in einer Zwischenwand;
- Fig. 16:: einen Teilquerschnitt durch die Zwischenwand nach Linie XVI-XVI in Fig. 15;
- Fig. 17:: eine Frontansicht des Lüftungsschlitzes;
- Fig. 18:: einen Vertikalschnitt durch eine Umschaltstation -- gemäß Linie XVIII-XVIII der Fig. 19 -- nach deren Herstellung mit zugeordneten Schalungselementen sowie einen vergrößerten Ausschnitt daraus;
- Fig. 19:: den gegenüber Fig. 18 vergrößerten Horizontalschnitt durch die Umformstation -- geschnitten etwa in Schnittebene H der Fig. 14 -- mit zugeordneten Schalungselementen;
- Fig. 20, 21:: Seitenansichten zweier gemäß Fig. 18, 19 erzeugten Umschaltstationen.

Eine quaderförmige, nicht begehbare Umschalt- oder Kleinstation 10 -- einer beispielsweisen Länge a von hier etwa 3.000 mm, einer Breite b von 1.300 mm, einer Gesamthöhe e von etwa 2.400 mm sowie einer oberhalb einer Rasenkante 12 sichtbaren Höhe h von etwa 1.650 mm -- zur Aufnahme eines nicht dargestellten, auf Rollen verfahrbaren Transformators weist an eine Bodenplatte 14 angeformte Seitenwände 16 sowie zwei diese in ihrem unteren Bereich verbindende Stirnwände 18 auf. Die Seitenwände 16 tragen eine auf ihre Oberkanten 17 aufgesetzte Dachplatte 20.

In den Seitenwänden 16 ist jeweils eine Ausnehmung 22 für einen türartigen Lüftereinsatz 24 vorgesehen, dessen Zarge 26 in die Seitenwand 16 so eingegossen ist, daß die Außenfläche des Lüftereinsatzes 24 innerhalb der Seitenwand 16 verläuft. Die horizontale Schwellenkante 23 der Ausnehmung 22 befindet sich in einem Abstand f von etwa 760 mm zur Unterfläche der Bodenplatte 14, deren Dicke i im übrigen etwa 120 mm mißt. Die Schwellenkanten 23 fluchten mit den Oberkanten 19 zweier die Stirnwände 18 darstellenden Betonstreifen, die in Abstand n von 30 mm oberhalb einer von der Bodenplattenunterseite bestimmten Ebene E an die Stirnwände 16 angegossen sind.

Die Schwellenkanten 23 bestimmen gleichzeitig den in den gewachsenen Boden absenkbaren Sockelabschnitt der Umschaltstation 10 und damit deren Einsatztiefe d; die Umschaltstation 10 wird so in das Erdreich eingelassen, daß die Rasenkante oder Bodenoberfläche 12 geringfügig unterhalb der Schwellenkanten 23 bzw. der Oberkanten 19 liegt.

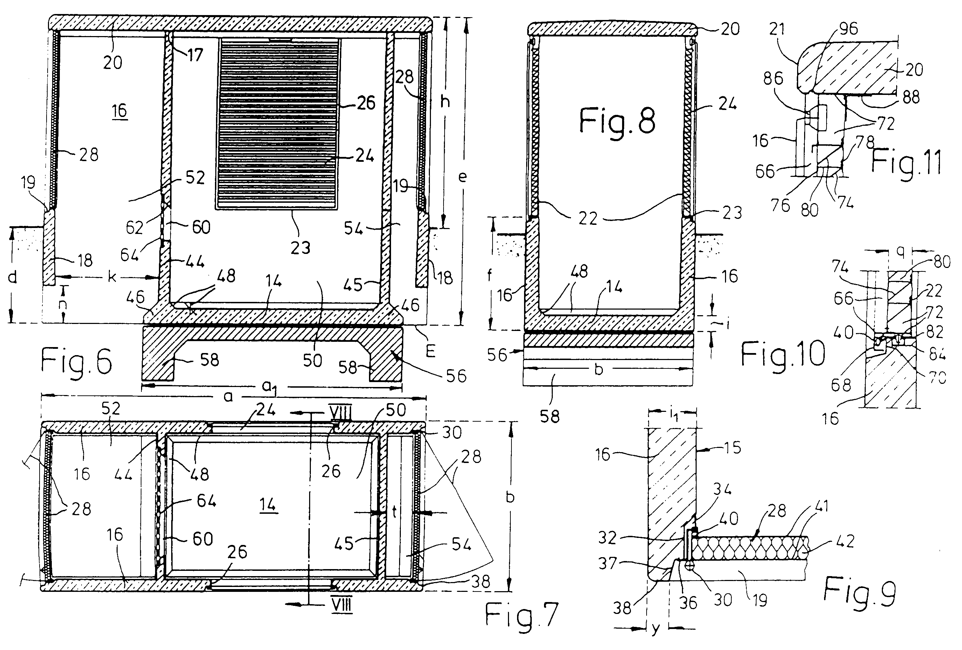

Zwischen den Oberkanten 19 der Betonstreifen oder Stirnwände 18 und der Dachplatte 20 erstrecken sich einflügelige -- gegebenenfalls auch zweiflügelige -- Verschlußtüren 28, die mit Scharnieren 30 an Zargen 32 angelenkt sind. Letztere verlaufen in einem Rücksprung 34 der Innenfläche 15 der Seitenwand 16; dieser Rücksprung 34 ist Teil einer -- im horizontalen Querschnitt -- zweistufigen Einformung, deren zweite -- äußere -- Stufe an einem in Fig. 9 mit 36 bezeichneten Schulterabsatz beginnt, deren Seitenfläche 37 nach außen geneigt ist und eine optische schmale Endkante 38 der Seitenwand 16 ermöglicht. Die Breite y der Endkante 38 mißt weniger als 50 mm und ist damit etwa um die Hälfte kürzer als die Dicke i₁ der Seitenwand 16. Die querschnittlich etwa Z-förmige Zarge 32 ist mit einem ihrer Schenkel an den Schulterabsatz 36 angeschlagen; der andere Schenkel trägt eine Dichtung 40 für die zwischen zwei parallelen Platten 41 mit Isolierstoff 42 gefüllte Verschlußtüre 28. Deren Frontfläche fluchtet mit jenem Schulterabsatz 36.

In einem Abstand k von etwa 900 mm zu der in Fig. 6 linken Stirnwand 18 ist an eine Kante der rechteckigen Bodenplatte 14 eine Zwischenwand 44 angeformt, der an der anderen Plattenkante eine zweite Zwischenwand 45 gegenüberliegt. Die Plattenkanten bilden außerhalb dieser Zwischenwände 44, 45 einen abwärts geneigten Endwulst 46. Dessen Neigung entspricht auf der inneren Seite der Zwischenwände 44, 45 eine gegenläufig geneigte Pultfläche 48 als Übergang zur Bodenplatte 14. Dieser Übergang ist auch an den Seitenwänden 16 vorhanden.

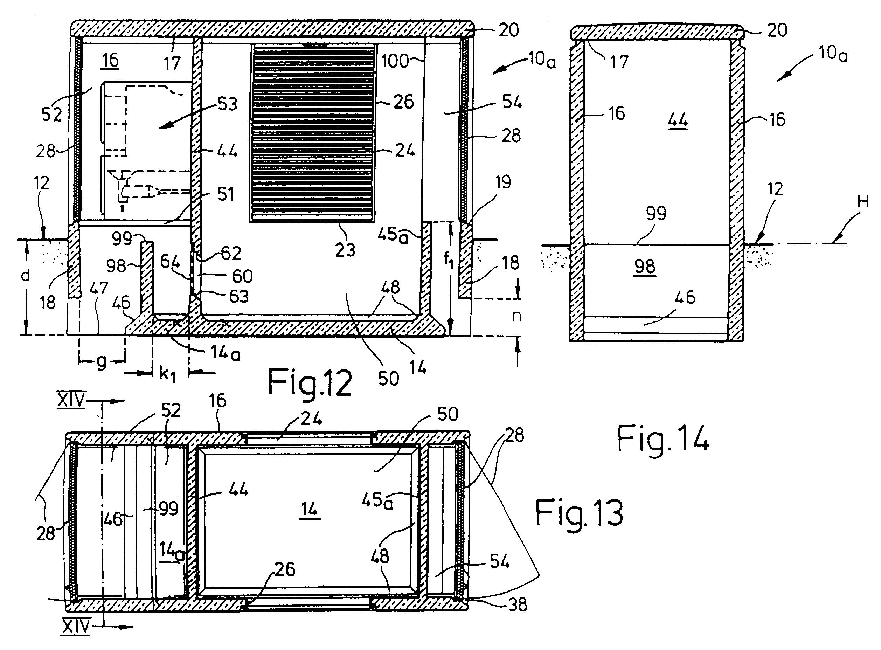

Die monolithisch an die Bodenplatte 14 der Länge a₁ von 2.000 mm sowie an die Seitenwände 16 angeformten Zwischenwände 44, 45 begrenzen mit diesen einen Umformraum 50 für den Transformator. Dem Umformraum 50 sind -- in Fig. 6, 7 bzw. 12, 13 -- links ein Mittelspannungsraum 52 sowie rechts ein Niederspannungsraum 54 der Tiefe t von etwa 200 mm für entsprechende MS- und NS-Schaltgeräte benachbart; beide Räume 52, 54 sind nach unten hin sowie unterhalb der Stirnwände 18 nach außen offen. Jene MS- und NS-Schaltgeräte sind in der Zeichnung aus Gründen der Übersichtlichkeit vernachlässigt; lediglich in Fig. 12 ist bei 53 ein auf Tragschienen 51 ruhendes MS-Schaltgerät angedeutet.

In Fig. 6 ist eine Fundamentplatte 56 -- der Länge a₁ sowie der Breite b -- U-förmigen Querschnittes als Träger für die Bodenplatte 14 zu erkennen; die beiden endwärtigen Schenkel 58 der Fundamentplatte 56 sind als Fußstreifen von der Bodenplatte 14 weggerichtet.

In die MS-Zwischenwand 44 ist in ihrem unteren Bereich ein schlitzartiger Durchbruch 60 mit zum Umformraum 50 abwärts geneigtem Sturz 62 und ebenfalls geneigter Sohlbank 63 eingebracht, der von einem Lüftungsgitter 64 überspannt ist.

Die Zarge 26 für den Lüftereinsatz 24 ist ein aus einer Aluminiumlegierung gefertigtes stranggepreßtes Zargenprofil. Es bildet einen insgesamt U-förmigen Rahmen.

Der Lüftereinsatz 24 weist einen Einsatzrahmen 66 auf, der mit einem kastenartigen Randwulst 68 einer frontparallelen Anschlagschulter 70 der Seitenwand 16 vorgeordnet ist; in diesem Randwulst 68 ruht in Fig. 10 eine Schlauchdichtung 40. Innerhalb des Einsatzrahmens 66 läuft ein flaches Blechprofil 72 der Breite q als Rahmen für Querprofile 74, die jweils aus einem schmalen Frontsteg 76, einem geneigten Mittelstreifen sowie einem Rückensteg 78 bestehen und parallel so festgelegt sind, daß der Frontsteg 76 des einen Querprofils 74 dem Rückensteg 78 des darunter liegenden Querprofils 74 gegenüberliegt; zwischen diesen verläuft ein Gitterblech 80 als Stocherschutz.

Am unteren Teil des Blechprofils 72 sind Zapfen 82 vorgesehen, die in eine Halfenschiene 84 der Ausnehmungsleibung eingesteckt werden.

Nahe dem oberen Ende des Lüftereinsatzes 24 ist in Längsmitte ein sog. Dirak-Schloß 86 vorgesehen, dessen nicht erkennbarer Sperriegel in Schließstellung in die Zarge 26 eingreift, wenn jenes obere Ende an einem an der Dachplatte 20 festliegenden Stahlwinkel 88 anschlägt.

Dieser Stahlwinkel 88 dient auch der Verbindung von Dachplatte 20 und Seitenwand 16, wie dies Fig. 5 zeigt. Dort wird auch verdeutlicht, daß die Umlaufkante 21 der Dachplatte 20 mit der Außenfläche 90 der Seitenwand 16 fluchtet, die nach oben hin unter Bildung einer nach außen geneigten Schulterfläche 92 sowie einer unter der Dachplatte 20 verlaufenden Fuge 94 so ausgeklinkt ist, daß die Breite y von 50 mm der verbleibenden Oberkante 17 geringfügig größer ist als die halbe Wanddicke i₁. Die Breite z jener Fuge 94 in der Ebene der Außenfläche 90 entspricht hier dem Maß der Breite y₁.

Im freien Überstand der Dachplatte 20 ist über der Schulterfläche 92 noch eine Tropfnut 96 vorgesehen.

Bei den Ausführungen einer Raumzelle oder Umschaltstation 10ₐ der Fig. 12 bis 17 ist der Lüftungsschlitz oder Durchbruch 60 der Zwischenwand 44 insgesamt unterhalb der durch die Rasenkante 12 bestimmten horizontalen Ebene H (Fig. 14) angeordnet. Sein Sturz 62 verläuft -- zum Umformraum 52 hin abwärts geneigt -- querschnittlich in einem größeren Neigungswinkel w (etwa 45°) zur Horizontalen als die Sohlbank 63 -- Winkel w₁ von 35° --, wobei auch die seitlichen Leibungen 59 in einem Horizontalwinkel w₂ von hier 125° zum Umformraum 50 hin zueinander weisen.

Zum Schutz des Durchbruches 60 -- und damit des Umformraumes 50 -- gegen ansonsten eindringendes Grundwasser ist der MS-Zwischenwand 44 in Abstand k₁ -- der hier weniger als die Hälfte des Abstandes k der MS-Zwischenwand 44 von der ihr benachbarten Stirnwand 18 beträgt -- eine Wehrwand 98 vorgeordnet. Diese ist unter Bildung eines auswärts gerichteten Endwulstes 46 an die um einen Abschnitt 14ₐ verlängerte Bodenplatte 14 angegossen und ragt innerhalb des Mittelspannungsraumes 52 auf. In diesem begrenzt jener Endwulst 46 mit der benachbarten Stirnwand 18 einen sich zwischen den Seitenwänden 16 erstreckenden Bodenspalt 47 der Breite g als Kabeldurchgang od.dgl..

Gemäß Fig. 12, 14 fluchtet die Oberkante 99 der Wehrwand 98 etwa mit jener Ebene H oder verläuft geringfügig unterhalb dieser.

Bei der Umschaltstation 10ₐ endet die in Fig. 12 rechte NS-Zwischenwand 45ₐ geringfügig oberhalb der Ebene H; der Abstand f₁ ihrer Oberkante zur Unterfläche der Bodenplatte 14 beträgt hier etwa 800 mm und entspricht etwa dem Abstand f letzterer von der Schwellenkante 23 der Ausnehmung 22. Zwischen dieser NS-Zwischenwand 45ₐ und der Dachplatte 20 verläuft eine auf die NS-Zwischenwand 45ₐ aufgesetzte Blechtrennwand 100.

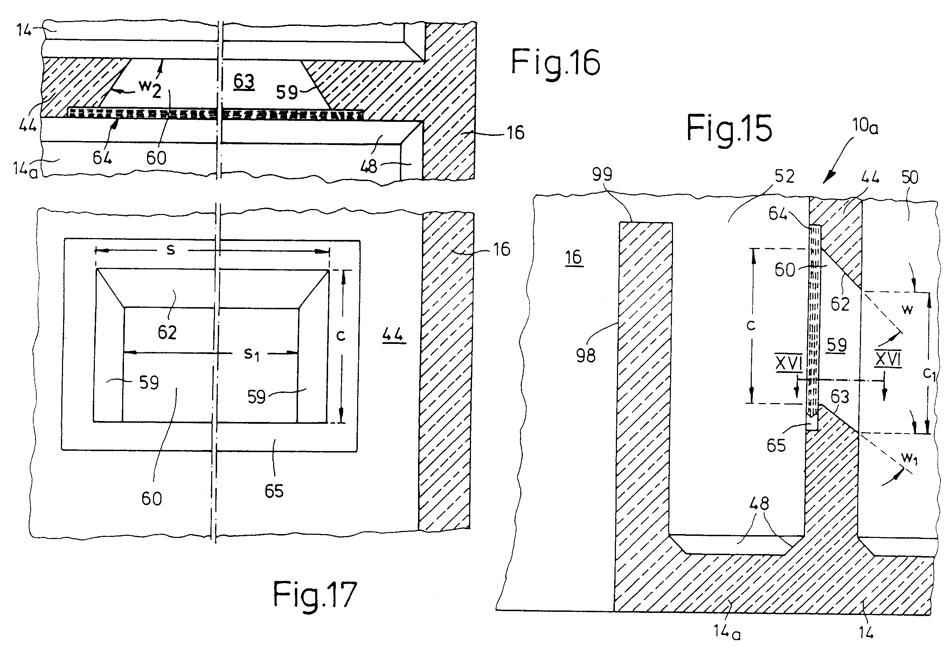

Wie bereits erörtert, dient die Belüftungseinrichtung in der Zwischenwand 44 aus Durchbruch oder Lüftungsschlitz 60 und Lüftungsgitter 64 der besseren Durchlüftung des Umspannraumes 50. Dazu ist dieser Lüftungsschlitz 60 sowohl abwärts geneigt als auch von einem sich zum Umformraum 50 hin verjüngenden Querschnitt - dies zur Erzeugung eines Düseneffektes. Der beispielhaft in Fig. 15 bis 17 gezeigte Lüftungsschlitz 60 -- mit in die Zwischenwand 44 eingeformtem Einsatzrahmen 65 für das Lüftungsgitter 64 -- weist eine äußere Höhe c von 300 mm und eine umspannraumseitige engste Höhe c₁ von 280 mm auf. Die äußere Weite s mißt dazu 780 mm und die engste innere Weite s₁ hier 680 mm.

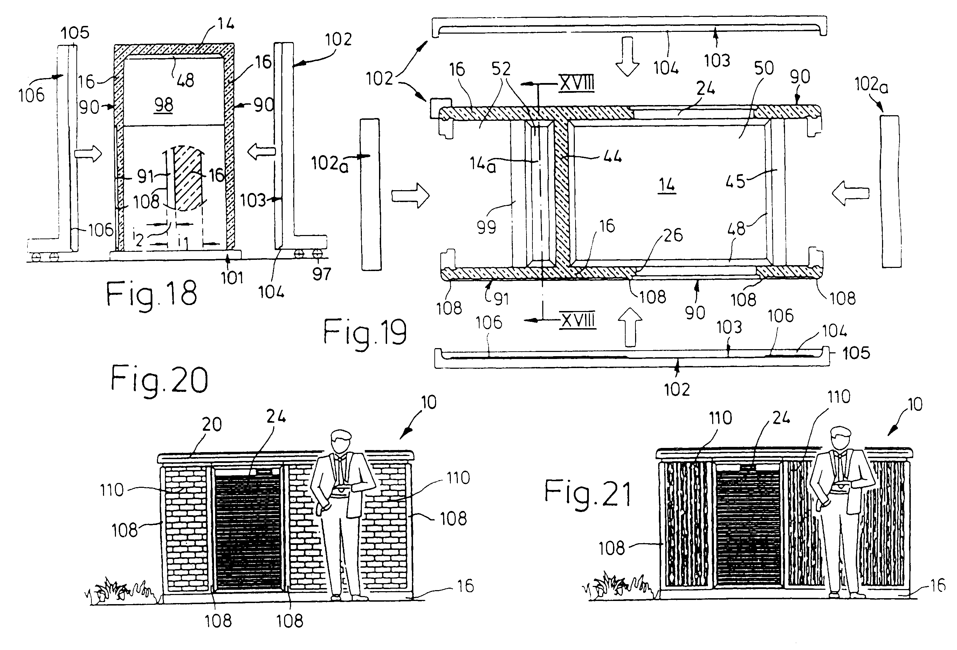

Die Raumzelle 10, 10ₐ wird gemäß Fig. 18, 19 unter Einsatz eines nicht dargestellten Schalungskernes sowie an diesen auf Rollen 97 heranfahrbarer seitlicher Außenschaltafeln 102 sowie stirnwärtiger Außenschaltafeln 102ₐ gegossen. Die seitlichen Außenschaltafeln 102 sind mit an der Unterkannte ihrer Schalflächen 103 abragenden Fußleisten 104 ausgestattet, sowie mit innenseitig querschnittlich teilkreisförmig gekrümmten Eckanformungen 105, zudem trägt die in Fig. 18 linke Außenschaltafel 102 Ansatzplatten 106, welche eine Rücksprungfläche 91 der Tiefe i₂ in der Außenfläche 90 der Seitenwand 16 erzeugen. Jene Fußleisten 104 liegen während des Gießvorganges einer Schalungsbasis 101 auf und tragen zur Ausbildung der oben beschriebenen Schattenfuge 94 bei.

Die Rücksprungflächen 91 werden seitlich von schmalen Rahmenstreifen 108 begrenzt, deren Oberflächen in der Außenfläche 90 der Seitenwand 16 liegt. Auf die Rücksprungfläche 91 wird eine Dekoroberfläche 110 -- beispielsweise in Fig. 20 Klinkerriemen sowie in Fig. 21 Reliefputz -- aufgebracht.

## Patentansprüche

1. Transportable Raumzelle in Form einer mit einem Sockelabschnitt teilweise in Erdreich abgesenkten, einen Umformraum (50) für einen Transformator od.dgl. enthaltenden Umspannstation (10) mit an eine Bodenplatte (14) angefügten Seitenwänden (16) und diese überspannender Dachplatte (20), bei der die Seitenwände (16) durch wenigstens eine den Umformraum (50) zu einem Spannungsraum hin begrenzende Zwischenwand (44, 45) sowie durch zumindest eine Stirnwand (18) verbunden sind, wobei bevorzugt die Zwischenwand (44, 45) einen Durchbruch (60) aufweist, den bodenwärts eine Sohlbank (63) begrenzt, die zu dem zu belüftenden Raum der Raumzelle (10, 10ₐ), insbesondere zum Umformraum (50), hin abwärts geneigt ist (Winkel w₁).

2. Raumzelle nach Anspruch 1, gekennzeichnet durch einen etwa in Richtung der Sohlbank (63) geneigten (Winkel w) Sturz (62) des Durchbruches (60), wobei sich dessen von beiden Flächen (62, 63) begrenzter vertikaler Querschnitt zum Umformraum (50) hin verjüngt, wobei der Neigungswinkel (w₁) der Sohlbank (63) gegebenenfalls kleiner ist als der Neigungswinkel (w) des Sturzes (62) des Durchbruches (60).

3. Raumzelle nach Anspruch 1 oder 2, dadurch gekennzeichnet, daß die seitlichen Leibungen (59) des Durchbruches (60) zur Wandoberfläche geneigt verlaufen (Winkel w₂) und sich der horizontale Querschnitt des Durchbruches zum Umformraum (50) hin verjüngt.

4. Raumzelle nach einem der Ansprüche 1 bis 3, dadurch gekennzeichnet, daß der Durchbruch (60) der Zwischenwand (44) in dem Sockelabschnitt (Einsatztiefe d) verläuft sowie der an die Zwischenwand anschließende Spannungsraum (52) bodenwärts offen ist, wobei in diesem dem als Lüftungsschlitz dienenden Durchbruch in Abstand (k₁) eine Wandung (Wehrwand 93) vorgeordnet ist, deren Oberkante (99) etwa von der Einsatztiefe der Raumzelle (10, 10ₐ) bestimmt und die Teil einer von dem Durchbruch vorgesehenen etwa trogartigen Wasserschutzreinrichtung ist, wobei gegebenenfalls die Wandung (Wehrwand 98) sowohl an die Bodenplatte (14, 14ₐ) außerhalb des Umformraums (50) im Abstand (k₁) zur Zwischenwand (44) als auch an die Seitenwände (16) angefügt ist sowie die Höhe der Wandung der Einsatztiefe (d) der Raumzelle (10, 10ₐ) etwa entspricht und/oder die Wandung (Wehrwand 98) an eine Kante der Bodenplatte (14, 14ₐ) angeformt ist sowie mit einer benachbarten Stirnwand (18) zwischen den Seitenwänden (16) einen Bodenspalt (47) begrenzt.

5. Raumzelle nach einem der Ansprüche 1 bis 4, dadurch gekennzeichnet, daß die Wandung (Wehrwand 98) an einen von der Zwischenwand (44) abkragenden Verlängungsabschnitt (14ₐ) der Bodenplatte (14) angeformt ist sowie innerhalb des Spannungsraumes (52) von der Bodenplatte (14ₐ) aufragt, und/oder daß das Verhältnis des Abstandes (k₁) der Wandung (Wehrwand 98) von der Zwischenwand (44) zu deren Abstand (k) von der Stirnwand (18) etwa 1 : 2 bis 1 : 3 ist.

6. Raumzelle nach einem der Ansprüche 1 bis 5, dadurch gekennzeichnet, daß die Wandung (Wehrwand 98) und eine der Zwischenwände (44,45ₐ) an quer zu den Seitenwänden (16) verlaufende Kanten der Bodenplatte (14,44ₐ) angeformt sind, wobei gegebenenfalls die Plattenkanten Endwulste (46) sind, die vor den anschließenden Wänden (45ₐ,98) eine abwärts geneigte Pultfläche bilden.

7. Raumzelle nach einem der Ansprüche 1 bis 6, dadurch gekennzeichnet, daß die Stirnwände (18) von an die Seitenwände (16) angeformten Betonstreifen gebildet sind, welche in Abstand (k,t) zur Bodenplatte (14,14ₐ) sowie in Abstand (n) zur Unterkante der Seitenwände verlaufen.

8. Raumzelle mit zumindest einer Ausnehmung für ein türartiges Verschließelement des Umformraumes in einer Seitenwand nach wenigstens einem der Ansprüche 1 bis 12, dadurch gekennzeichnet, daß das türartige Verschließelement ein formschlüssig in der Schwellenkante (23) der Ausnehmung (22) festlegbarer Lüftungseinsatz (24) ist, wobei gegebenenfalls Steckzapfen (82) des Lüftungseinsatzes (24) in Gegenlieder einer Halfenschiene (84) od.dgl. Schienenelement der Schwellenkante (23) einsetzbar sind und/oder der Lüftungseinsatz (24) Strömungswege für Luft begrenzende Querprofile (74) aufweist, die in einem Einsatzrahmen (66) horizontal festliegen und jeweils durch einen flächigen Frontsteg (76), einen dazu geneigten Mittelstreifen und einen zum Frontsteg parallelen Rückensteg (78) die Tiefe des Lüftereinsatzes bestimmen, wobei dem Frontsteg des einen Querprofils der Rückensteg des darunter verlaufenden Querprofils gegenüberliegt und beide durch ein in ihnen lösbar festgelegtes Gitterelement (80) etwa horizontal verbunden sind.

9. Raumzelle nach wenigstens einem der Ansprüche 1 bis 8, dadurch gekennzeichnet, daß zumindest eine der Seitenwände (16) und/oder Stirnwände (18) mit einer gesondert eingesetzten und/oder auswechselbaren Oberflächenschicht (110) versehen und diese an einer Rücksprungfläche (91) der Wand festgelegt ist, wobei gegebenenfalls die Oberfläche der Oberflächenschicht (110) mit der Außenfläche (90) der Seitenwand (16) und/oder Stirnwand (18) etwa fluchtet und/oder die Rücksprungfläche (91) von an die Seitenwand (16) und/oder Stirnwand (18) angeformten Rahmenteilen (108) begrenzt ist.

10. Raumzelle nach wenigstens einem der Ansprüche 1 bis 9, gekennzeichnet durch einen schulterartigen Absatz (94) an der Oberkante (19) der Seitenwand (16) oder Stirnwand (18) als Schattenfuge.

11. Vorrichtung zum Herstellen einer Raumzelle aus Beton mittels eines Schalungskernes sowie mindestens einer relativ dazu verstellbaren Außenschaltafel zur Bildung eines Gießraumes für eine Seiten- oder Stirnwand nach wenigstens einem der Ansprüche 1 bis 10, dadurch gekennzeichnet, daß wenigstens eine Außenschaltafel (102) zumindest eine auf ihre Schalfläche (103) aufgesetzte Ansatzplatte (106) aufweist, deren Dicke der Tiefe (i₂) einer in die entsprechende Seitenwand (16) und/oder Stirnwand (18) einzuformenden Rücksprungfläche (91) entspricht.

12. Vorrichtung nach Anspruch 11, dadurch gekennzeichnet, daß die der Oberkante (19) der Seitenwand (16) und/oder der Stirnwand (17) zugeordnete Längskante der Außenschaltafel (102) mit einer diese Längskante begleitenden Fußleiste (104) zur Ausformung eines umlaufenden schulterartigen Absatzes (94) an der entsprechenden Wand ausgestattet ist.

13. Vorrichtung nach Anspruch 11 oder 12, dadurch gekennzeichnet, daß die Dicke der Ansatzplatte (106) geringer ist als die Kragweite der Fußleiste (104).

14. Vorrichtung nach einem der Ansprüche 11 bis 13, dadurch gekennzeichnet, daß wenigstens eine Vertikalkante der Außenschaltafeln (102, 102ₐ) ein Winkelstück ist und eine querschnittlich gekrümmte Innenfläche aufweist.

15. Vorrichtung mit vier dem Schalungskern zugeordneten Außenschaltafeln nach einem der Ansprüche 11 bis 13, dadurch gekennzeichnet, daß zwei einander gegenüberliegende Außenschaltafeln (102) beidends mit vertikalen Winkelschenkel (105) versehen sind, die gegebenenfalls eine querschnittlich gekrümmte Innenfläche anbieten.
